# DEMANDE DE BREVET EUROPEEN

(11) **EP 2 679 467 A2**
(43) Date de publication de la demande: **01.01.2014**
(21) Numéro de dépôt: 13171463.6
(22) Date de dépôt: 11.06.2013
(51) Int. Cl.: B62B 5/00, B62B 5/06, A45F 3/14, A45C 13/38, A45F 3/08, B62B 1/20, B62K 27/00

(54) **Ensemble de portage multifonctions pour randonneurs pédestres ou cyclorandonneurs**

(30) Priorité: 28.06.2012 FR 1256167
(71) Demandeur: Gala, Francis, 25660 Montrond Le Chateau (FR)
(72) Inventeur: Gala, Francis, 25660 Montrond Le Chateau (FR)
(74) Mandataire: Brungard, Yves Francois

(57) **Abrégé**

La présente invention se rapporte à un ensemble de portage (1) transformable pour les randonnées constitué :
- d'un contenant (2) destiné au rangement,
- d'un châssis (3),
- d'un harnais (4),

caractérisé en ce que le châssis (3) est constitué par deux longerons latéraux externes (7 et 8), s'étendant de part et d'autre du contenant (2), présentant :
- d'une part, à leurs extrémités inférieures, un axe transversal (9) à partir duquel s'étend une fourche (10) et une roue (11) pouvant être escamotées dans un compartiment (55) du contenant (2),
- et d'autre part, à leurs extrémités supérieures, deux bras prolongateurs (39,40) de portage tracté, aptes à être repliés.

## Description

### Domaine technique

La présente invention se rapporte à un ensemble de portage transformable pour randonnées constitué de :
- un contenant destiné au rangement et au transport d'objets, susceptible de constituer une charge dorsale,
- un châssis de rigidification sur lequel est fixé le contenant,
- un harnais formé de sangles souples reliant le châssis aux épaules d'un utilisateur.

### Etat de la technique

Il est connu, par le brevet américain N° 3 856 191, un ensemble de portage d'une charge pouvant être utilisé à dos d'homme, comme un sac à dos, par l'intermédiaire de sangles, ou en le posant à terre et en le reliant aux hanches de la même personne, par l'intermédiaire d'une ceinture, la partie inférieure du châssis comportant un couple de roues aptes, dans ce cas, à rouler sur le sol. La charge est alors tractée.

Mais l'inconvénient du système décrit tient au fait de l'omniprésence desdites roues, qui sont fixes au châssis et encadrent en conséquence le bas du dos de l'utilisateur, lorsqu'il porte lui-même la charge.

Ceci présente l'inconvénient de nuire au confort à cause des roues sur le corps, avec le risque supplémentaire de souiller les vêtements après une utilisation de l'ensemble en portage tracté, dans des conditions d'environnement défavorables (pluie, boue, neige, terre, etc.).

### Description de l'invention

La présente invention a pour but de remédier à ces inconvénients, tout en élargissant les fonctions possibles mises à disposition de l'utilisateur.

A cet effet, elle concerne un ensemble de portage transformable pour les randonnées constitué de :
- un contenant destiné au rangement et au transport d'objets, susceptible de constituer une charge dorsale,
- un châssis de rigidification sur lequel est fixé le contenant,
- un harnais formé de sangles souples reliant le châssis aux épaules d'un utilisateur,
**caractérisé en ce que** le châssis est constitué par deux longerons latéraux externes, s'étendant de part et d'autre du contenant, présentant :
- d'une part, à leurs extrémités inférieures, un axe transversal à partir duquel s'étend perpendiculairement une fourche, supportant elle-même une roue de bicyclette, le sous-ensemble fourche- roue ainsi formé étant relié audit axe transversal du châssis par l'intermédiaire d'une double articulation, apte à rendre la roue escamotable, par rotation angulaire, et à permettre son rangement parallèlement au châssis, lors d'un portage dorsal, ou à la rendre opérationnelle lors d'un portage tracté, pédestre ou cycliste, après rotation du sous-ensemble fourche - roue autour de l'axe transversal et sur lui-même à 90°, ladite double articulation étant associée à des moyens de blocage selon une position angulaire choisie en fonction de l'utilisation et de la taille de l'utilisateur,
- et d'autre part, à leurs extrémités supérieures, deux bras prolongateurs de portage tracté, aptes à être repliés sur eux-mêmes le long des longerons fixes du châssis, par l'intermédiaire d'articulations, lors d'un portage dorsal, ou à être basculés en avant du contenant, lors d'un portage tracté.

A partir d'une telle base de conception, comme nous le verrons plus loin, seront déclinées d'autres caractéristiques permettant non seulement l'utilisation de l'ensemble en portage à dos ou en portage tracté pédestre ou cycliste, mais également en dispositif de repos, du type hamac.

La présente invention concerne également les caractéristiques qui ressortiront au cours de la description qui va suivre, et qui devront être considérées isolément ou selon toutes leurs combinaisons techniques possibles.

Cette description donnée à titre d'exemple non limitatif, fera mieux comprendre comment l'invention peut être réalisée en référence aux dessins annexés sur lesquels :

### Brève description des figures

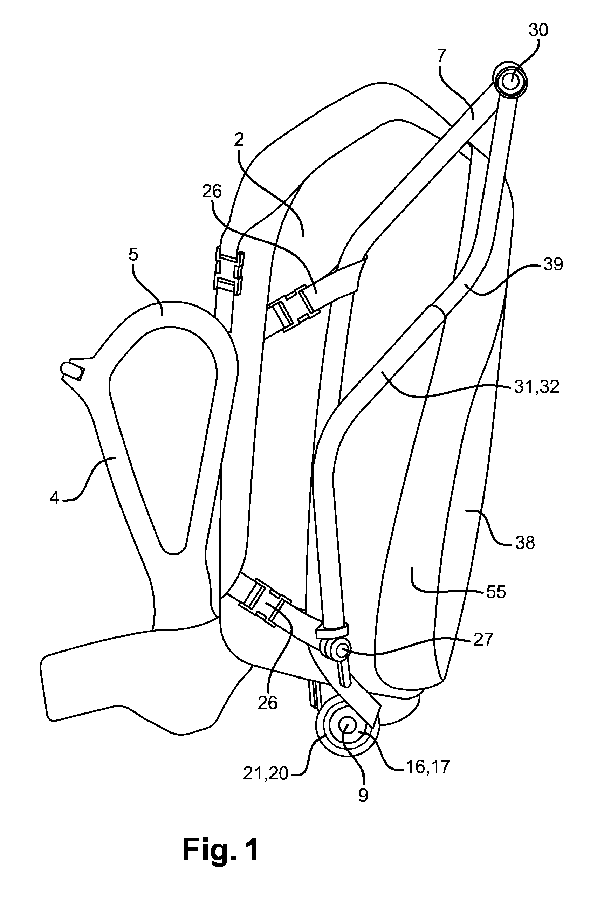

- La figure 1 représente, en vue latérale, un ensemble de portage selon l'invention, prêt à être installé sur les épaules d'un utilisateur, en vue d'une randonnée pédestre, et transformé à la demande pour être tracté manuellement, cyclo-tracté, ou encore être converti en hamac.

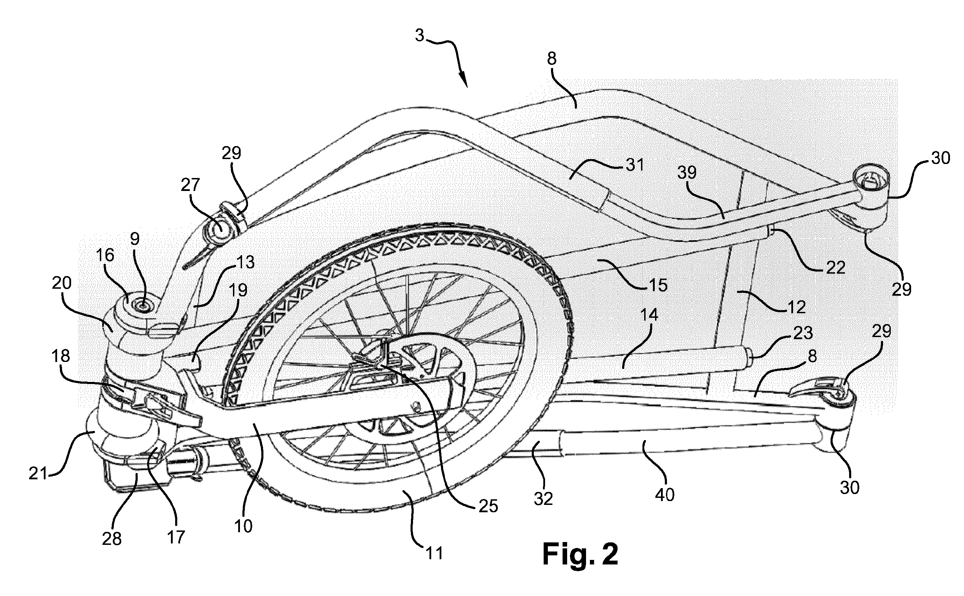

- La figure 2 représente, en perspective, un ensemble de portage selon la figure 1, auquel ont été ôtés le contenant et le harnais, pour une meilleure compréhension de la constitution de l'armature métallique.

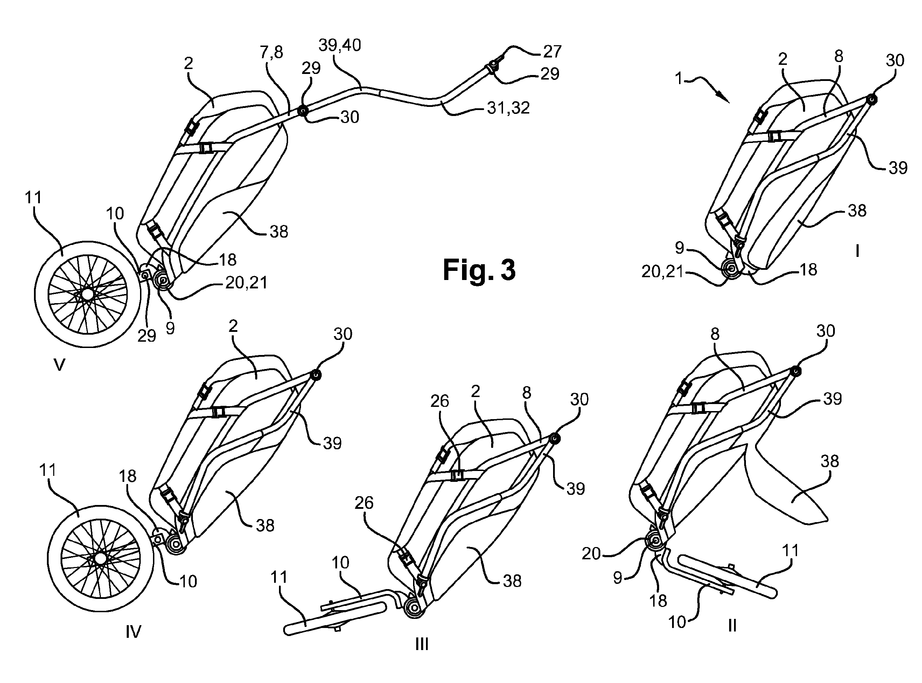

- La figure 3 représente une vue synoptique de l'ensemble de portage des figures 1 et 2, au cours de sa transformation selon les phases I à V, pour utilisation en mode tracté manuellement.

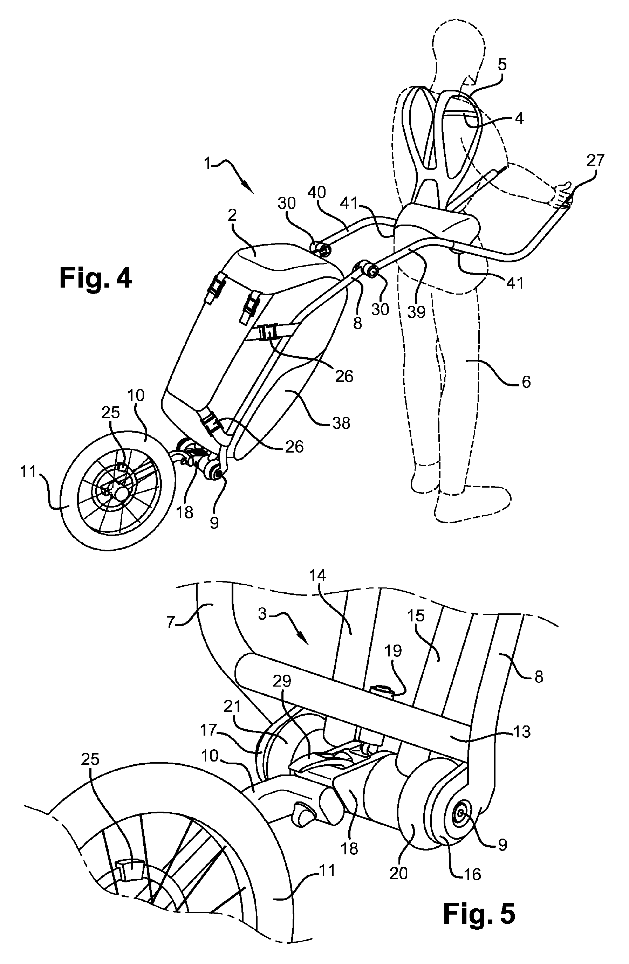

- La figure 4 représente une vue en perspective de l'ensemble, déployé selon l'ordre d'exécution de la figure 3, attelé à un utilisateur.
- La figure 5 représente une vue en perspective et à échelle agrandie du sous-ensemble fourche - roue, selon le mode tracté manuellement des figures 3 et 4.

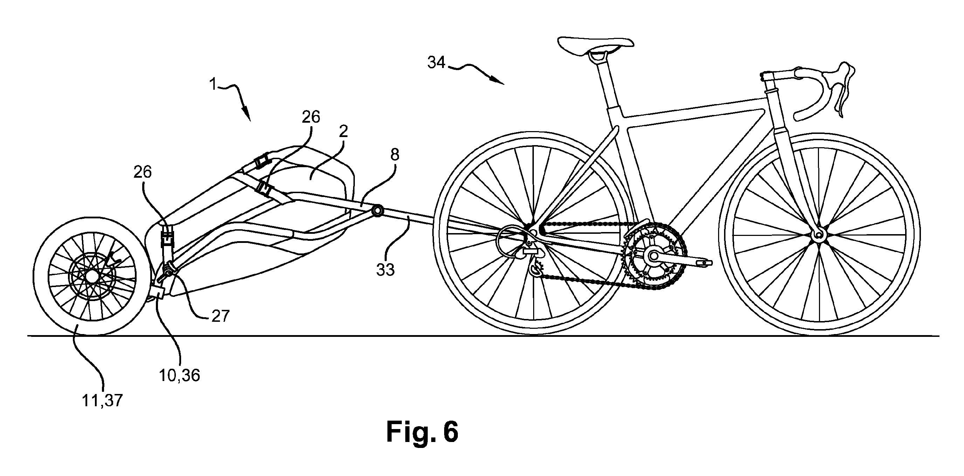

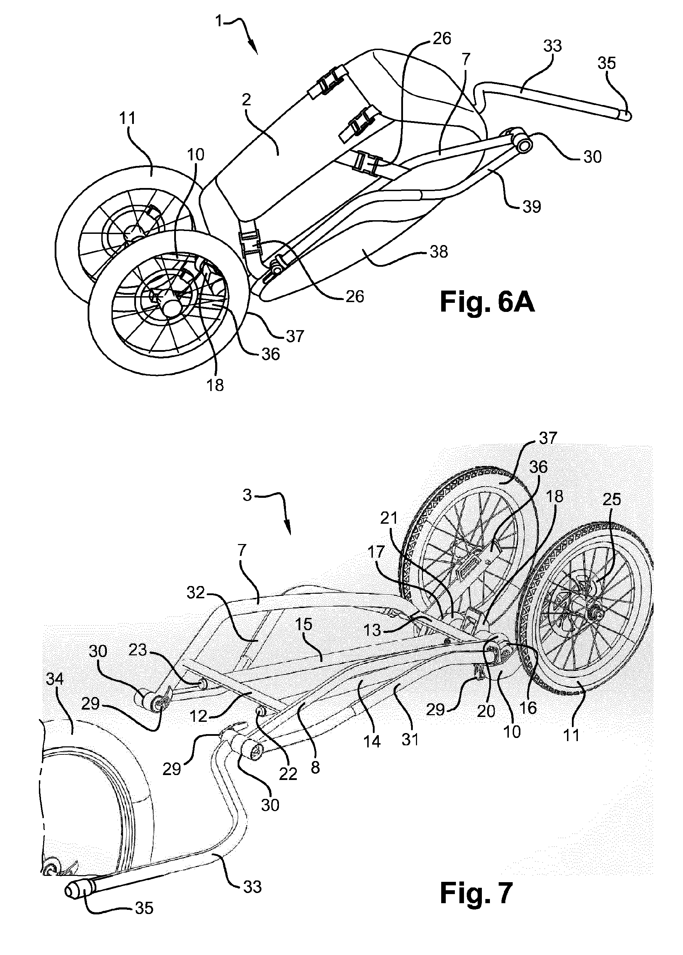

- Les figures 6 et 6A représentent, en vue latérale et en perspective, l'ensemble de portage après transformation en mode cyclo-tracté.
- La figure 7 représente une vue en perspective selon la figure 6, après avoir ôté le contenant et le harnais pour une meilleure compréhension, et montrant bien un train arrière constitué par deux roues.

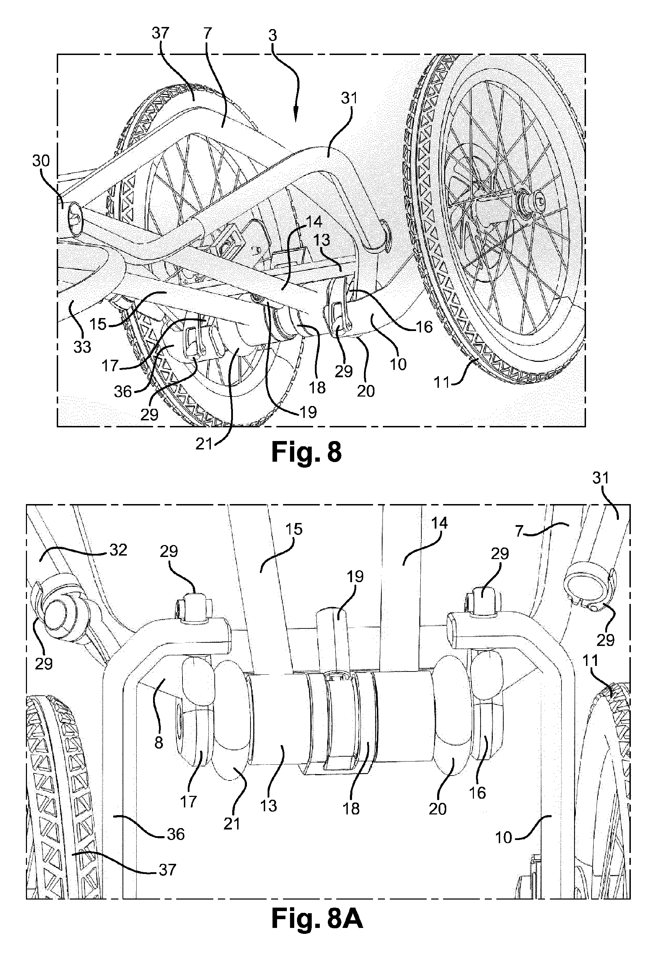

- La figure 8 représente une vue en perspective à échelle agrandie du train de roues arrières de l'ensemble, pour une meilleure compréhension.
- La figure 8A représente une vue de détail des composants de l'axe transversal du châssis.

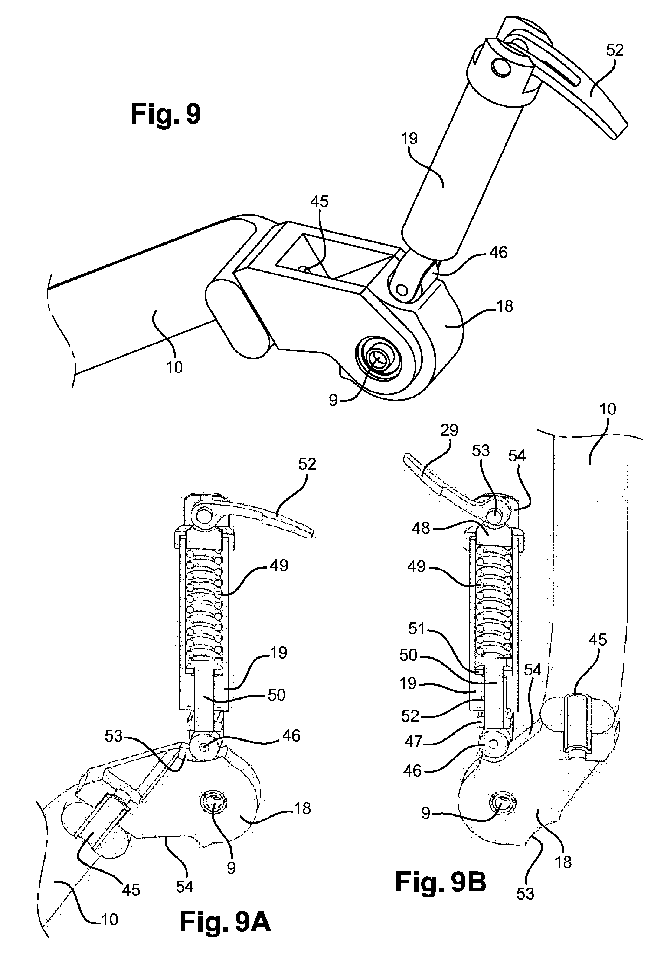

- Les figures 9, 9A et 9B représentent des vues à échelle agrandie d'un système d'amortissement de roue arrière, respectivement dans des positions opérationnelle et de reploiement, selon le mode d'application des figures 6, 7 et 8.

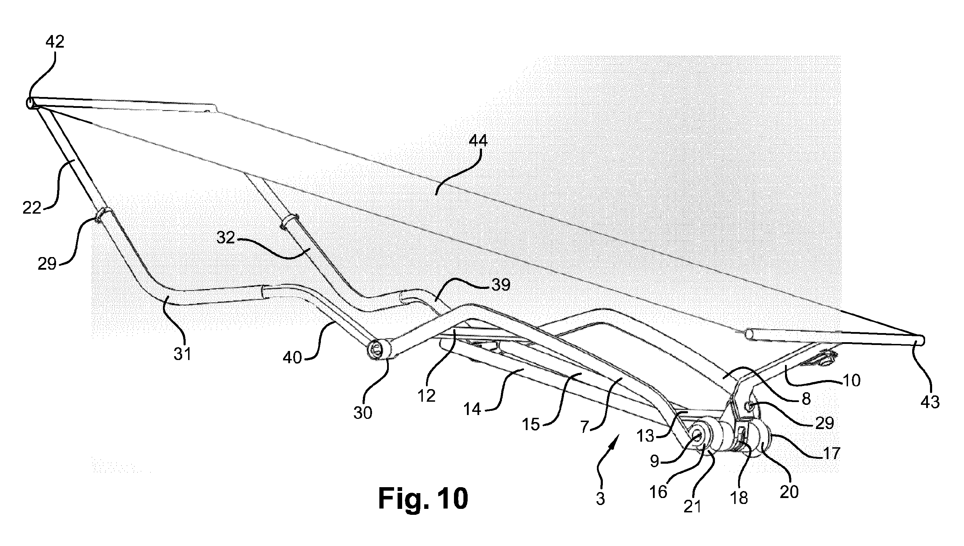

- La figure 10 représente une vue en perspective de l'ensemble de portage selon une quatrième application, consistant en une transformation en mode hamac, après avoir ôté le contenant et la roue du sous-ensemble fourche - roue.

### Description détaillée

L'ensemble de portage 1 globalement désigné sur les figures est constitué de :
- un contenant 2 destiné au rangement et au transport d'objets, susceptible de constituer une charge dorsale,
- un châssis de rigidification 3 sur lequel est fixé le contenant 2,
- un harnais 4 formé de sangles souples 5 reliant le châssis 3 aux épaules d'un utilisateur 6.

Selon l'invention, le châssis 3 est constitué par deux longerons latéraux externes 7 et 8, s'étendant de part et d'autre du contenant 2, présentant :
- d'une part, à leurs extrémités inférieures, un axe transversal 9 à partir duquel s'étend perpendiculairement une fourche 10, supportant elle-même une roue 11 de bicyclette, le sous-ensemble fourche 10 - roue 11 ainsi formé étant relié audit axe transversal 9 du châssis 3 par l'intermédiaire d'une double articulation 18,45, apte à rendre la roue 11 escamotable, par rotation angulaire, et à permettre son rangement parallèlement au châssis 3, lors d'un portage dorsal, ou à la rendre opérationnelle lors d'un portage tracté, pédestre ou cycliste, après rotation du sous-ensemble fourche 10 - roue 11 autour de l'axe transversal 9 et sur lui-même à 90°, ladite double articulation 18,45 étant associée à des moyens de blocage 14 selon une position angulaire choisie en fonction de l'utilisation et de la taille de l'utilisateur,
- et d'autre part, à leurs extrémités supérieures, deux bras prolongateurs 39,40 de portage tracté, aptes à être repliés sur eux-mêmes le long des longerons fixes 7,8 du châssis 3, par l'intermédiaire d'articulations 30, lors d'un portage dorsal, ou à être basculés en avant du contenant 2, lors d'un portage tracté.

Par ailleurs, le contenant 2 est relié aux longerons externes 7,8 du châssis 3 par l'intermédiaire de sangles 26, de manière à le rendre amovible, selon le type de portage choisi.

Lors d'un portage dorsal, le sous-ensemble fourche 10 - roue 11 est logé dans un compartiment dédié 55 du contenant 2.

Le contenant 2 est rigide ou souple et comporte un couvercle 38 également rigide ou souple du compartiment dédié 55.

Les bras de portage tracté 39,40 sont supportés par deux parties latérales inférieures 41 du harnais 4.

Les articulations 30 interposées entre les bras de portage tracté 39,40 et les extrémités des longerons fixes 7,8 du châssis 3 sont munis de moyens de blocage 29 en rotation, selon un angle désiré.

Le châssis 3 est composé des barres supérieure et inférieure 12,13 et des barres latérales 14,15.

Le châssis 3, les longerons 7,8 ainsi que les bras prolongateurs 39,40 sont avantageusement réalisés en tube métallique ou autre, et sont revêtus d'une mousse de confort 31,32.

Par ailleurs, l'axe transversal inférieur 9 du châssis de base 3 comporte, outre le sous-ensemble fourche 10 - roue 11, deux roulettes 20,21 d'appui au sol, de l'ensemble 1, ainsi que deux pièces de liaison 16,17 pouvant avantageusement permettre le positionnement de deux fourches 10,36 et de deux roues 11,37.

Selon un perfectionnement du système, la roue 11 est équipée d'un système de freinage 25, relié par câble à une poignée de commande 27 fixée sur l'un des bras prolongateurs 39,40, de manière à maîtriser la vitesse de l'ensemble en position tractée, pédestre ou cycliste, dans une descente par exemple.

Egalement la roue 11 est équipée d'une génératrice de courant destinée à recharger une batterie embarquée dans un second compartiment dédié du contenant 2, ceci de manière à répondre à certains besoins du randonneur tels que téléphone, ordinateur portable, GPS, etc. au cours de son déplacement.

Pour une utilisation de l'ensemble 1 en randonnée cycliste, l'un des longerons externes 7,8 du châssis 3 se prolonge, à son extrémité supérieure, par un timon 33 articulé et blocable en position, destiné à être accroché 35 à un cycle 34.

Dans ce cas, l'axe transversal inférieur 9 du châssis 3 est équipé d'un second sous-ensemble fourche 36 - roue 37, chacun des sous-ensembles étant équipé d'un système de blocage rapide 29.

Le contenant 2 comporte éventuellement un troisième compartiment dédié destiné au second sous-ensemble 36-37.

Selon une autre caractéristique de l'invention, la fourche 36 ou 10 de la roue 37 ou 11 est reliée au châssis 3 par l'intermédiaire d'un système d'amortissement, composé d'un cylindre 19 à l'intérieur duquel est logé un ressort à compression 49, agissant à l'encontre d'un piston 50 coulissant dans un palier 51 du cylindre 19, et en relation externe avec un galet d'amortissement 46 coopérant élastiquement avec une première zone creuse 53 de la came 18 solidaire de la fourche 10, dans une première position opérationnelle de celle-ci, ladite came 18 comportant une seconde zone creuse 54 sensiblement diamétralement opposée, de profondeur plus importante que la première 53, de manière que lors d'une décompression partielle du ressort 49, s'effectuant à partir d'un levier de serrage rapide 52, en vue de la manoeuvre de la fourche 10 vers une seconde position de rangement, ledit galet 46 se loge, tout en y étant élastiquement retenue, dans la zone creuse 54 de la came 18.

Selon une application supplémentaire de l'ensemble de portage 1, le châssis 3 composé des deux longerons latéraux 7,8, de l'axe transversal inférieur 9 et des barres 12,13,14,15, auxquels s'ajoutent, vers l'avant, les deux bras prolongateurs 39,40 de portage tracté et deux rallonges télescopiques 22,23, et vers l'arrière, la fourche 10, après démontage de la roue 11, constitue, après déploiement au sol, une armature dont l'extrémité des rallonges 22,23 et de la fourche 10 reçoivent des barres-support 42,43 d'une toile 44 formant hamac, permettant à un utilisateur en randonnée pédestre ou cyclo-pédestre de se reposer.

Avantageusement, les rallonges télescopiques 22,23 sont rangées dans les tubes 14,15 du châssis 3, en cas de non utilisation.

## Revendications

1. Ensemble de portage (1) transformable pour les randonnées constitué de :
- un contenant (2) destiné au rangement et au transport d'objets, susceptible de constituer une charge dorsale,
- un châssis de rigidification (3) sur lequel est fixé le contenant (2),
- un harnais (4) formé de sangles souples (5) reliant le châssis (3) aux épaules d'un utilisateur (6),
ledit châssis (3) étant constitué par deux longerons latéraux externes (7 et 8), s'étendant de part et d'autre du contenant (2), et par des barres supérieure et inférieure (12,13) et des barres latérales (14,15), lesdits longerons (7,8) présentant :
- d'une part, à leurs extrémités inférieures, un axe transversal (9) à partir duquel s'étend perpendiculairement une fourche (10), supportant elle-même une roue (11) de bicyclette, le sous-ensemble fourche (10) - roue (11) ainsi formé étant escamotable, par rotation angulaire, pour permettre son rangement parallèlement au châssis (3), lors d'un portage dorsal, ou à la rendre opérationnelle lors d'un portage tracté,
- et d'autre part, à leurs extrémités supérieures, deux bras prolongateurs (39,40) de portage tracté, aptes à être repliés sur eux-mêmes le long des longerons fixes (7,8) du châssis (3),
**caractérisé en ce que** le contenant (2) comporte un compartiment dédiés (55), dans lequel est logé le sous-ensemble fourche (10) - roue (11), lors d'un portage dorsal.

2. Ensemble de portage selon la revendication 1, **caractérisé en ce que** le contenant (2) est rigide ou souple et comporte un couvercle (38) également rigide ou souple du compartiment dédié (55).

3. Ensemble de portage selon l'une des revendications 1 ou 2, **caractérisé en ce que** l'axe transversal inférieur (9) du châssis de base (3) comporte, outre le sous-ensemble fourche (10) - roue (11), deux roulettes (20,21) d'appui au sol, de l'ensemble (1), ainsi que deux pièces de liaison (16,17) pouvant avantageusement permettre le positionnement de deux fourches (10,36) et de deux roues (11,37).

4. Ensemble de portage selon l'une des revendications 1 à 3, **caractérisé en ce que** la roue (11) est équipée d'une génératrice de courant destinée à recharger une batterie embarquée dans un second compartiment dédié du contenant (2).

5. Ensemble de portage selon l'une des revendications 1 à 4, **caractérisé en ce que**, pour son utilisation en randonnée cycliste, l'un des longerons externes (7,8) du châssis (3) se prolonge, à son extrémité supérieure, par un timon (33) articulé et blocable en position, destiné à être accroché (35) à un cycle (34).

6. Ensemble de portage selon la revendication 5, **caractérisé en ce que**, en utilisation en randonnée cycliste, l'axe transversal inférieur (9) du châssis (3) est équipé d'un second sous-ensemble fourche (36) - roue (37), chacun des sous-ensembles étant équipé d'un système de blocage rapide (29).

7. Ensemble de portage selon la revendication 6, **caractérisé en ce que** le contenant (2) comporte un troisième compartiment dédié, destiné au second sous-ensemble (36-37).

8. Ensemble de portage selon l'une des revendications 5 ou 7, **caractérisé en ce que** la fourche (36 ou 10) de la roue (37 ou 11) est reliée au châssis (3) par l'intermédiaire d'un système d'amortissement, composé d'un cylindre (19) à l'intérieur duquel est logé un ressort à compression (49), agissant à l'encontre d'un piston (50) coulissant dans un palier (51) du cylindre (19), et en relation externe avec un galet d'amortissement (46) coopérant élastiquement avec une première zone creuse (53) de la came (18) solidaire de la fourche (10), dans une première position opérationnelle de celle-ci, ladite came (18) comportant une seconde zone creuse (54) sensiblement diamétralement opposée, de profondeur plus importante que la première (53), de manière que lors d'une décompression partielle du ressort (49), s'effectuant à partir d'un levier de serrage rapide (52), en vue de la manoeuvre de la fourche (10) vers une seconde position de rangement, ledit galet (46) se loge, tout en y étant élastiquement retenue, dans la zone creuse (54) de la came (18).

9. Ensemble de portage selon l'une des revendications 1 ou 2, **caractérisé en ce que** le châssis (3), composé des deux longerons latéraux (7,8), de l'axe transversal inférieur (9) et des barres (12,13,14,15), auxquels s'ajoutent, vers l'avant, les deux bras prolongateurs (39,40) de portage tracté et deux rallonges télescopiques (22,23), et vers l'arrière, la fourche (10), après démontage de la roue (11), constitue, après déploiement au sol, une armature dont l'extrémité des rallonges (22,23) et de la fourche (10) reçoivent des barres-support (42,43) d'une toile (44) formant hamac, permettant à un utilisateur en randonnée pédestre ou cyclo-pédestre de se reposer.

10. Ensemble de portage selon la revendication 9, **caractérisé en ce que** les rallonges télescopiques (22,23) sont rangées dans les tubes (14,15) du châssis (3), en cas de non utilisation.
